# EUROPÄISCHE PATENTANMELDUNG

(11) **EP 0 930 143 A2**
(43) Veröffentlichungstag der Anmeldung: **21.07.1999**
(21) Anmeldenummer: 99100682.6
(22) Anmeldetag: 15.01.1999
(51) Int. Cl.: B29C 44/58, B29C 33/48, B29C 33/24, B29C 33/28

(54) **Herstellung von aufgeschäumten Formkörpern**

(30) Priorität: 16.01.1998 DE 19801328
(71) Anmelder: Hullmann, Rolf, 49536 Lienen (DE)
(72) Erfinder: Hullmann, Rolf, 49536 Lienen (DE)
(74) Vertreter: Busse & Busse Patentanwälte

(57) **Zusammenfassung**

Bei einem Verfahren zur Herstellung von aufgeschäumten Formkörpern, insbesondere Sitz- oder Lehnenkörpern eines Autositzes, bei dem ein Formkörper in einer mehrere Schalenteile umfassenden Aufschäumform gebildet wird, während des Aufschäumens durch einem Schalenteil der Aufschäumform zugeordnete Eingriffselemente in dem Formkörper Ausnehmungen gebildet werden, und nach Fertigstellung des Formkörpers dieser der Aufschäumform entnommen und von den Eingriffselementen abgelöst wird, die durch ein Verbindungsteil zu zumindest einer Eingriffseinheit zusammengefaßt sind, wird die Eingriffseinheit vor dem Schäumvorgang in den zugehörigen Schalenteil als Bestandteil eingesetzt, und der Formkörper an dem in seinem Bereich den Formraum begrenzenden Verbindungsteil der Eingriffseinheit abgeformt.

## Beschreibung

Die Erfindung betrifft ein Verfahren sowie eine Vorrichtung zur Herstellung von aufgeschäumten Formkörpern nach dem Oberbegriff des Anspruches 1 bzw. des Anspruches 9.

Formkörper dieser Art werden beispielsweise als Sitzpolster oder Lehnenteil für Autositze eingesetzt. Es ist bekannt, derartige Formkörper mit durchgehenden Lochungen zu versehen, um hierdurch eine Belüftung sicherzustellen. Zur Herstellung der Lochungen sind in einer Aufschäumform, die üblicherweise ein unteres und ein oberes Schalenteil umfaßt, die zum Entformen des darin aufgeschäumten Formkörpers voneinander getrennt werden, stabförmige Dorne vorgesehen, die den aufschäumenden Formling vollständig durchgreifen. Diese Dorne sind beispielsweise mit dem unteren Schalenteil der Aufschäumform verbunden. Ein Sitzpolster wird in Über-Kopf-Lage aufgeschäumt, da sich während des Aufschäumens bildende Luftblasen zur Oberfläche wandern. Derartige Lufteinschlüsse sind an der Sitzoberfläche unerwünscht. Diese wandern daher in den späteren unteren Bereich des Sitzes, der nach seiner Entformung gewendet wird. Zur Entformung ist es erforderlich, daß die seitlichen Randbereiche des Sitzes, insbesondere seine Vorderkante, um den unteren Schalenteil der Aufschäumform einwärts gezogen und bereichsweise gerollt werden, um den Kantenbereich zu lösen. Dabei werden die durch die Dorne gebildeten Lochungen mit seitlich auswärts gerichteten Kräften beaufschlagt, so daß die Gefahr eines Einreißens besteht. Bei Ausbildung von größeren Ausnehmungen und Mustern von Ausnehmungen ist die Einreißgefahr erhöht.

Die US 5,342,569 zeigt ein Verfahren zur Anbringung eines Sicherheitsbandes in einem aufzuschäumenden Artikel, beispielsweise einem Schaumkörper für einen Automobilsitz oder eine Sitzlehne. Bei einer ersten Ausführungsform sind dabei die Eingriffselemente mit einer Formhälfte der Aufschäumform fest verbunden. Beim Entformen des aufgeschäumten Formkörpers werden auch hier die durch die Dorne gebildeten Lochungen mit seitlich auswärts gerichteten Kräften beaufschlagt und unterliegen der Gefahr von Rißbildungen. Bei einer weiteren Ausführung der US 5,342,569 ist die Formhalbschale getrennt von den Eingriffselementen 20 ausgebildet. Diese sind an einer Platte gehalten, durchgreifen Lochungen in der Wandung eines Schalenteils der Aufschäumform und erstrecken sich in den Formraum, wenn die Platte auf der Außenseite der zugehörigen Formhalbschale aufliegt. Durch Hochziehen der Eingriffseinheit können die Eingriffselemente vor dem Ausformen des Formkörpers entfernt werden.

Die US 3,012,284 offenbart Eingriffselemente, die gruppenweise an streifenförmigen Platten als Verbindungsteile befestigt sind und mit diesen Eingriffseinheiten bilden. Die Eingriffseinheiten bilden gemeinsam einen ebenen Deckel für ein unteres Schalenteil einer Aufschäumform und sind im wesentlichen vertikal abhebbar, um Rißbildungen in dem die Lochungen im Formkörper umgebenden Material zu vermeiden.

Der Erfindung liegt das Problem zugrunde, die Entformung von Formkörpern auch solcher komplizierter Gestalt aus ihrer Ausschäumform zu verbessern und insbesondere die Einreißgefahr während des Entformens zu vermindern.

Die Erfindung löst das Problem mit einem Verfahren mit den Merkmalen des Anspruches 1 sowie einer Vorrichtung mit den Merkmalen des Anspruchs 9.

Die Eingriffseinheiten bilden erfindungsgemäß Einsatzteile, die in Betriebsstellung formraumbegrenzender Bestandteil des zugehörigen Schalenteils der Aufschäumform sind, und können nach dem erfindungsgemäßen Verfahren während der Entformung des Formkörpers aus der Aufschäumform in diesem verbleiben und erst danach außerhalb der Aufschäumform von Hand entfernt werden, wobei die Gefahr des Einreißens des Formkörpers im Bereich der gebildeten Ausnehmungen deutlich verringert ist. Somit ist es auch möglich, Ausnehmungen im Formkörper zu bilden, die eine von einfachen Lochungen abweichende Form haben, beispielsweise durch Einsatz von sich über einen Teilbereich der Dicke des Formkörpers erstreckenden Hülsen, die einen konzentrischen Dorn umgeben. Dadurch wird im Formkörper ein Muster von einzeln stehenden röhrenförmigen Hohlzylindern erzeugt, die neben dem zentralen Belüftungsdurchlaß einen Ringbereich aufweisen, der eine Punktelastizität des Formkörpers gewährleistet. Diese einzeln stehenden Hohlzylinder sind im unteren Bereich miteinander verbunden, da sich die Hülsen zur Bildung der Zylinder nur über einen Teilbereich der Sitz- bzw. Lehnendicke erstrecken.

Statt eines Verbleibs der Eingriffseinheit bzw. -einheiten beim Entformen können die Eingriffseinheiten nach dem Aufschäumen des Formkörpers aus dem Formkörper herausgezogen werden, bevor die Aufschäumform zur Entnahme des Formkörpers geöffnet wird, wodurch eine Einreißgefahr ebenfalls verringert ist. Die Eingriffseinheiten können dabei derart parallel aus dem zugehörigen Schalenteil und dem Formkörper herausgezogen werden, daß ein seitliches Verkanten zuverlässig verhindert ist. Da das Verbindungsteil der Eingriffseinheiten in Betriebstellung Bestandteil der Wandung des zugehörigen Schalenteils bildet und in ihrem Bereich eine die Wandung des Schalenteils fortsetztende Formraumbegrenzung bildet, können auch förmlich komplizierte Formkörper gebildet werden, da das zugehörige Schalenteil beliebige Konturen darbieten kann.

Weitere Vorteile und Merkmale ergeben sich aus in der Zeichnung dargestellten Ausführungsbeispielen des Gegenstandes der Erfindung.

In der Zeichnung zeigt:
- Fig. 1: eine Aufschäumform mit erfindungsgemäß von dieser lösbaren Eingriffselementen in Seitenansicht,

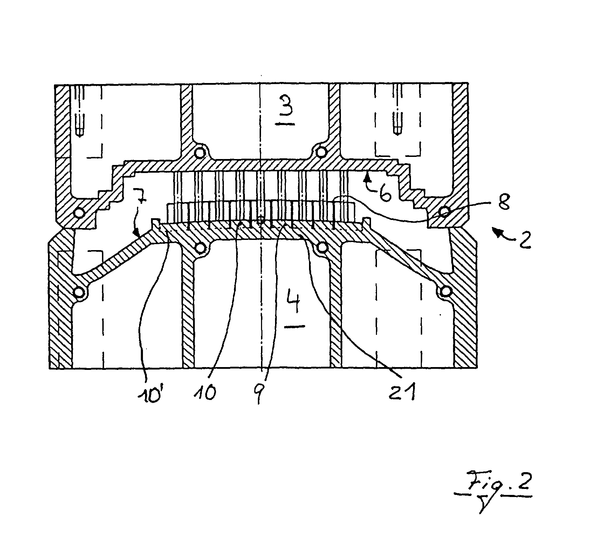

- Fig. 2: einen Schnitt entlang der Linie II-II in Fig. 1,

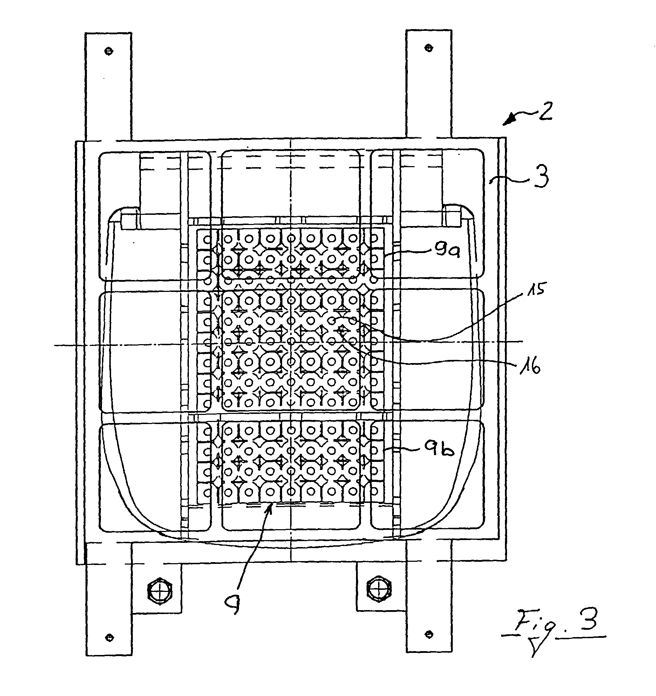

- Fig. 3: eine Draufsicht auf das Teil nach Fig. 1,
- Fig. 4: die Eingriffseinheit in Ansicht von oben,

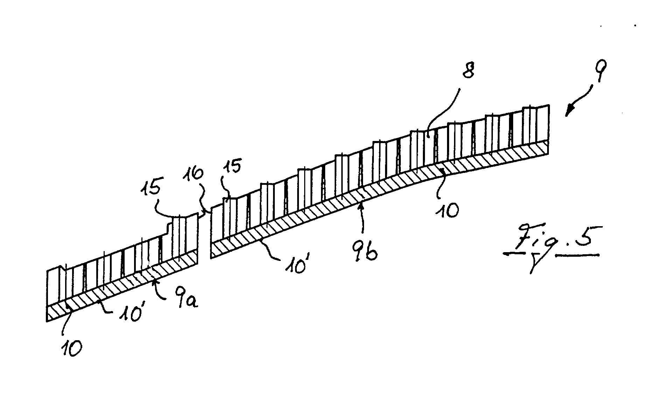

- Fig. 5: einen Schnitt entlang der Linie V-V in Fig. 4,
- Fig. 6: eine Aufschäumform mit über einen Antrieb verfahrbarer Eingriffseinheit,
- Fig. 7: das Teil nach Fig. 6 nach Herausziehen der Eingriffselemente aus dem Formkörper,
- Fig. 8: eine Ansicht von oben auf das Teil nach Fig. 6.

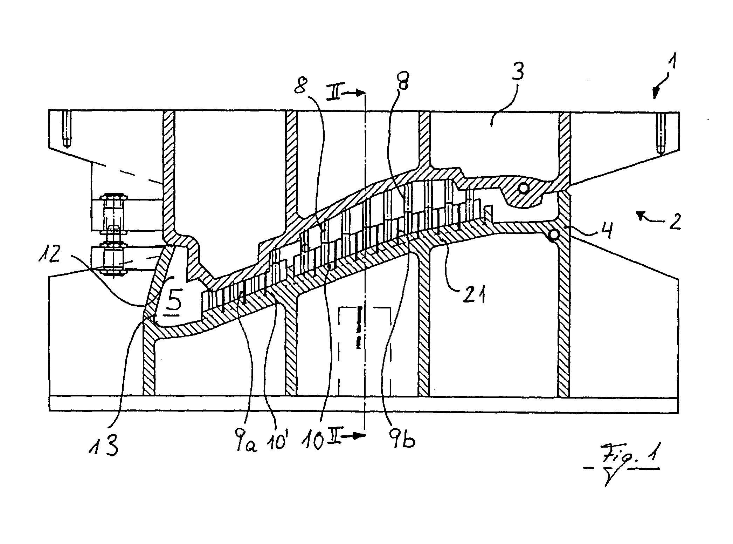

Die Vorrichtung 1 nach Fig. 1 umfaßt eine Aufschäumform 2, die ein oberes und ein unteres Schalenteil 3 bzw. 4 aufweist, zwischen denen das Aufschäumen des Formkörpers 5 stattfindet, der aus irgendeinem schäumbaren Material, insbesondere Kunststoff, Kunstharz oder Latex beteht. In der Aufschäumform 2 wird der Formkörper 5, beispielsweise ein Sitzkörper eines Autositzes, in Über-Kopf-Lage gefertigt. Das obere Schalenteil 3 begrenzt daher beim Aufschäumen die Unterfläche 6 des Formkörpers 5, das untere Schalenteil 4 die Oberfläche 7. Der Vorrichtung 1 sind Eingriffselemente 8 zugeordnet, die mit dem unteren Schalenteil 4 lösbar in Verbindung stehen und insgesamt durch ein Verbindungsteil 10 bzw. mehrere Verbindungsteile 10 zu einer ein- oder mehrteiligen Eingriffseinheit 9 zusammengefaßt sind. Im vorliegenden Ausführungsbeispiel umfaßt die Eingriffseinheit 9 zwei Teileinheiten 9a und 9b.

Entlang einer Trennfläche 10' ist die Eingriffseinheit 9 von der geschlossenen Innenfläche des Wandungsbereichs 21 des unteren, zugehörigen Schalenteils 4 lösbar, wobei die Teile während des Aufschäumens in Verbindung zueinander stehen und am Ende des Aufschäumprozesses voneinander gelöst werden. Dementsprechend ist es möglich, daß die Eingriffselemente 8 im Formkörper 5, und der Verbindungsteil 10 der Eingriffseinheit 9 am Formkörper 5 verbleiben.

Die Eingriffseinheit 9 ist elektromagnetisch oder durch Klammerverbindungen an dem Schalenteil 4 befestigt. Bei einer elektromagnetischen Befestigung kann eine Fernauslösung stattfinden, so daß das Lösen der Eingriffseinheit 9 von der Wandung 21 ohne weitere Handgriffe stattfinden kann.

Die Aufschäumform 2 weist den Randbereich 12 des Formkörpers 5 einfassende Hinterschneidungsbereiche 13 auf, aus denen zur Entformung der Formkörper durch eine Zugbewegung zu lösen ist, wobei ein Einrollen des Randbereiches 12 die Zugbewegung unterstützt. Hierbei besteht eine große Gefahr der Rißbildung im Bereich der Ausnehmungen des Formkörpers 5, wenn gleichzeitig eine manuelle Loslösung von den Eingriffselementen 8 erfolgt.

Daher verbleiben vorteilhaft die Eingriffselemente 8 beim Entformen des Formkörpers 5 in diesem, wobei der Formkörper 5 mit den die Ausnehmungen in dem Formkörper 5 herbeiführenden Eingriffselementen 8 und dem Verbindungsteil 10 aus der Aufschäumform 2 in Über-Kopf-Lage entnommen, anschließend gewendet wird. Nach dem Wenden wird dann die Eingriffseinheit 9 manuell entnommen. Dieses Entnehmen ist insofern unkritisch, als der aus der Aufschäumform 2 herausgelöste Formkörper 5 seitlich ausweichen kann und es somit bei der Entnahme der Eingriffselemente 8 allenfalls in Ausnahmefällen zu rißbildenden Druckbelastungen auf die Randbereiche um die Eingriffselemente 8 kommt, wie dies bei Herausziehen des Formteils 5 aus dem Schalenteil 4 der Aufschäumform 2 bei gleichzeitigem Ablösen von den Eingriffselementen 8 der Fall wäre. Dies wäre zudem, wenn von Hand ausgeführt, wesentlich zeitaufwendiger und würde die Aufschäumform blockieren. Die erfindungsgemäße Entformung ist insbesondere dann vorteilhaft, wenn die Eingriffselemente 8 nur teilweise die Dicke des Formkörpers 5 durchdringen und eine Formgebung in dem Formkörper 5 erzeugen, die nicht auf Lochungen beschränkt ist.

Die Eingriffseinheit 9 umfaßt bei dem dargestellten bevorzugten Ausführungsbeispiel neben zentralen Dornen 15, die den Formkörper 5 vollständig durchgreifen, konzentrisch den Dornen 15 angeordnete Hülsen 16, die im wesentlichen ringförmige Ausnehmungen in dem Formkörper 5 hinterlassen und sich nur über einen Teilbereich von dessen Dicke erstrecken. Im Formkörper 5 verbleiben daher röhrenförmige Schaumstoffanteile in dem Ringzwischenraum 17 zwischen den Dornen 15 und den Hülsen 16 als einzelne, punktelastische Hohlzylinder. Diese sind aufgrund der Anordnung der Eingriffselemente 8 neben- und hintereinander geometrisch regelmäßig angeordnet, so daß im wesentlichen die gesamte Fläche des Formkörpers 5 derartig punktelastische Röhren 17 aufweist. Dieses ist gegenüber reinen Belüftungslochungen, wie sie durch die Dorne 15 bewirkt werden, eine erhebliche Komfortsteigerung, da das Federungsverhalten eines derartigen Sitz- oder Lehnenpolsters deutlich verbessert ist. Die Stabilität des Sitzes bleibt dadurch erhalten, daß die Hülsen 16 den Formkörper 5 nur über einen Teilbereich seiner Dicke mit ausnehmen, so daß die Röhrenkörper 17 nur einen Teil der Dicke des Formkörpers 5 einnehmen, während der andere Teil eine geschlossene, eventuell von Lüftungsöffnungen durchzogene Fläche darbietet.

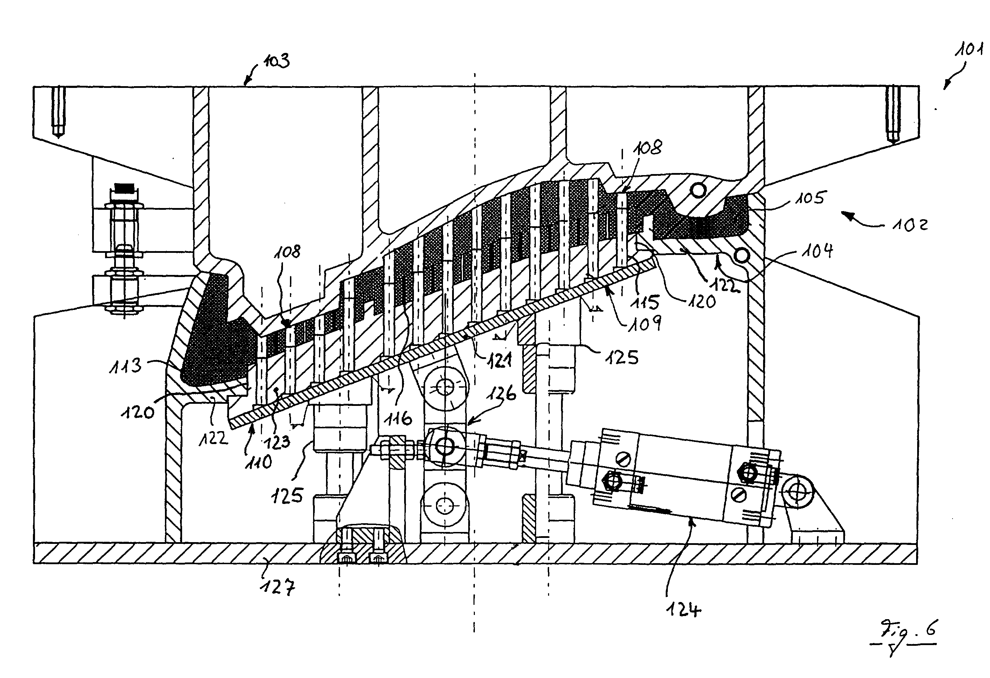

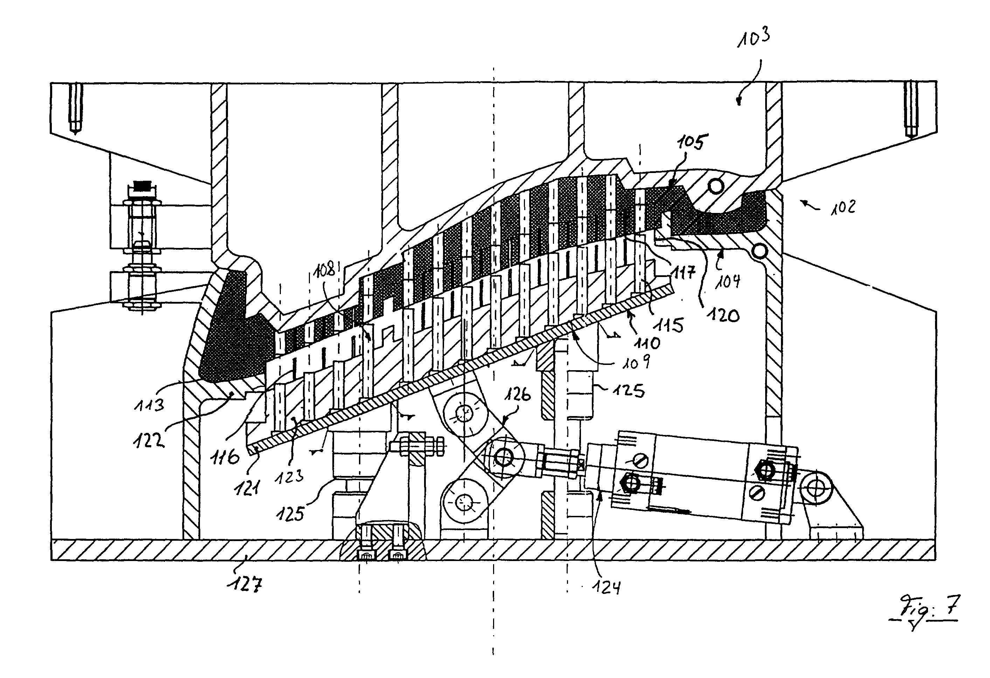

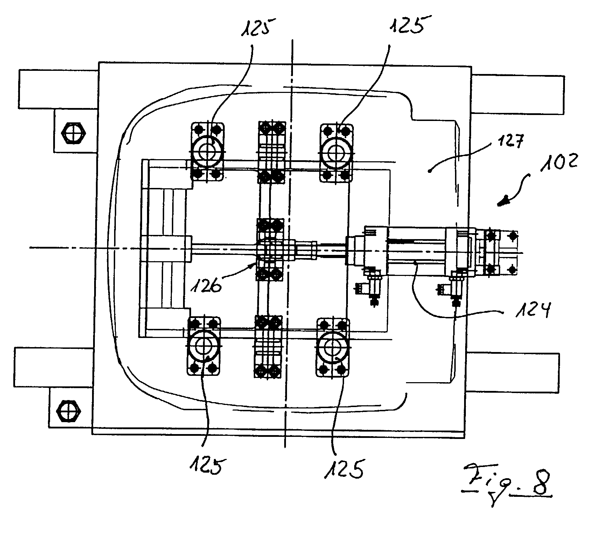

Bei dem zweiten Ausführungsbeispiel (Fig. 6 bis Fig. 8) umfaßt die Vorrichtung 101 eine Aufschäumform 102 mit einem unteren Schalenteil 104, das eine Aussparung 120 in seiner Wandung 122 aufwiest, in der eine Eingriffseinheit 109 eingesetzt ist. Diese umfaßt Eingriffselemtente 108 und ein Verbindungsteil 110, das aus einem Tragteil 121 und einem Paßstück 123 besteht. Die Eingriffseinheit 109 ist mittels Führungsgliedern 125 parallelverschieblich geführt und über einen Antrieb 124 aus der Aufschäumform 102 in eine untere Entformungsstellung bewegbar. Hierzu wirkt der Antrieb 124, z. B. ein Druckmittelantrieb, auf einen zentralen Kniehebel 126, der zwischen dem Tragteil 121 und einer Grundplatte 127 angebracht ist. Die Bewegung erfolgt dabei exakt parallel, so daß ein Verkanten der Eingriffselemente 108 ausgeschlossen ist. In Betriebsstellung ist das von Dornen 15 durchgriffene und Hülsen 16 tragende Paßstück 123 in die Aussparung exakt eingepaßt und durch den Antrieb gehalten. Zusätzliche Verschlußmaßnahmen sind nicht erforderlich.

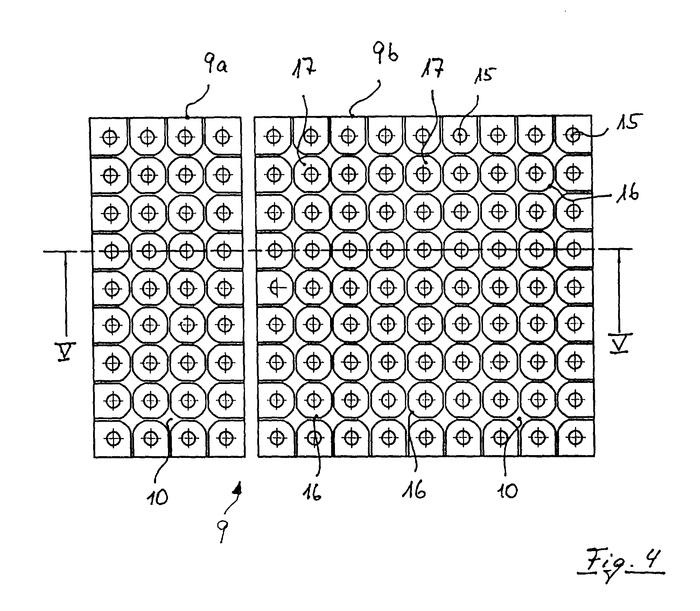

Die Eingriffseinheit 109 ist analog zu der in Fig. 4 gezeigten Ausführung ausgebildet, so daß der entstehende Formkörper 105 ebenfalls über einen Teilbereich seiner Dicke röhrenförmige Federungselemente 117 hat. Der Formkörper 105 entspricht dem Formkörper 105. Bei dem mit dieser Alternativvorrichtung durchgeführten Verfahren wird nach Beendigung des Aufschäumprozesses die bis dahin Bestandteil des Schalenteils 104 bildende Eingriffseinheit 109 parallel nach unten verfahren, so daß die Eingriffselemente 108 außer Eingriff mit dem Schaumkörper 105 gelangen, der anschließend nach Abheben des oberen Schalenteils 103 aus dem unteren Schalenteil 104 entformt werden kann. Rißbildungen im Formkörper 105 sind dadurch vermieden, daß die Eingriffselemente 108 exakt parallel herausgezogen werden. Durch das vor dem Entformen erfolgende Herausziehen der Eingriffselemente 108 ist ebenfalls ein gleichzeitig mit dem Entformen einhergehendes Ablösen von den Eingriffselementen 108 vermieden. Der Formkörper 105 kann die freien Ausnehmungen zum Belastungsausgleich nutzen, so daß auf die Randbereiche der Ausnehmungen beim Entformen keine Zugkräfte einwirken, sondern diese zusammengedrückt werden. Damit ist der Rißgefahr zuverlässig begegnet. Durch die Mehrteiligkeit der Wandung des mit den Eingriffselementen 108 bestückten Schalenteils 104, bei der der Verbindungsteil 110 den Hauptwandteil 122 ergänzt, können ebenfalls komplizierte Formgestalten verwirklicht werden. Durch den auf die Eingriffseinheit 109 wirkenden Antrieb 124 ist ein schnelles Herausbewegen der Eingriffselemente 108 möglich, was die Taktzeit für den Formvorgang verkürzt.

In den Formkörper 5 bzw. 105 können auch Verstärkungselemente, beispielsweise Zugbänder, eingearbeitet werden, die während des Aufschäumens in dem Formkörper 5,105 fixiert werden.

## Patentansprüche

1. Verfahren zur Herstellung von aufgeschäumten Formkörpern, insbesondere Sitz- oder Lehnenkörpern eines Autositzes, bei dem ein Formkörper in einer mehrere Schalenteile umfassenden Aufschäumform gebildet wird, während des Aufschäumens durch einem Schalenteil der Aufschäumform zugeordnete Eingriffselemente in dem Formkörper Ausnehmungen gebildet werden, und nach Fertigstellung des Formkörpers dieser der Aufschäumform entnommen und von den Eingriffselementen abgelöst wird, die durch ein Verbindungsteil zu zumindest einer Eingriffseinheit zusammengefaßt sind, **dadurch gekennzeichnet**, daß die Eingriffseinheit vor dem Schäumvorgang in den zugehörigen Schalenteil als Bestandteil eingesetzt wird und der Formkörper an dem in seinem Bereich den Formraum begrenzenden Verbindungsteil der Eingriffseinheit abgeformt wird.

2. Verfahren nach Anspruch 1, **dadurch gekennzeichnet**, daß die Eingriffseinheit in den zugehörigen, geschlossen ausgebildeten Schalenteil der Aufschäumform eingelegt, nach dem Einlegen rückseitig mit dem Schalenteil verbunden und vor Entformung des Formkörpers die Verbindung gelöst wird.

3. Verfahren nach Anspruch 1 oder 2, **dadurch gekennzeichnet**, daß der fertiggestellte Formkörper gemeinsam mit der in diesem verbleibenden Eingriffseinheit aus der Aufschäumform entnommen wird.

4. Verfahren nach Anspruch 1, **dadurch gekennzeichnet**, daß die Eingriffseinheit mit ihrem Verbindungsteil jeweils in eine Wandausnehmung des zugehörigen Schalenteils der Aufschäumform eingesetzt wird und den Formraum im Bereich der Ausnehmung verschließt.

5. Verfahren nach Anspruch 4, **dadurch gekennzeichnet**, daß die Eingriffseinheit bei geschlossener Aufschäumform aus dem fertiggestelten Formkörper herausgezogen wird.

6. Verfahren nach Anspruch 4 oder 5, **dadurch gekennzeichnet,** daß die Eingriffseinheit beim Herausziehen parallel zu sich selbst bewegt wird.

7. Verfahren nach einem der Ansprüche 1 bis 6, **dadurch gekennzeichnet,** daß die Eingriffselemente von ihrem Vertbindungsteil von unten in den sich bildenden Formkörper eingreifend gehalten werden.

8. Verfahren nach einem der Ansprüche 1 bis 7, **dadurch gekennzeichnet**, daß durch die Eingriffselemente im Formkörper Ausnehmungen, die diesen vollständig oder teilweise durchdringen, gebildet werden.

9. Vorrichtung zur Herstellung von aufgeschäumten Formkörpern (5;105), insbesondere Sitz- oder Lehnenkörpern eines Autositzes, mit einer mehrteiligen Aufschäumform (2;102) für die Bildung eines Formkörpers (5;105) und mit während der Bildung des Formkörpers (5;105) in der Aufschäumform (2;102) angeordneten Eingriffselementen (8;108) zur Bildung von Ausnehmungen im Formkörper (5;105), wobei die Eingriffselemente (8;108) Teil von zumindest einer Eingriffseinheit (9;109) bilden, in der die Eingriffselemente (8;108) an ihrem einen Ende durch ein Verbindungsteil (10;110) verbunden sind, **dadurch gekennzeichnet,** daß die Eingriffseinheit (9;109) ein Einsatzteil für eines der Schalenteile (4;104) der Aufschäumform (2;102) bildet und in Betriebsstellung das Verbindungsteil (10;110) der Eingriffseinheit (9;109) Teil der Wandung (21;121) des zugehörigen Schalenteils (4;104) ist, das in seinem Bereich den Formraum begrenzt, und Mittel zur Festlegung der Eingriffseinheit (9;109) in ihrer Betriebsstellung vorgesehen sind.

10. Vorrichtung nach Anspruch 9, **dadurch gekennzeichnet,** daß das Verbindungsteil (10) der Eingriffseinheit (9) in Betriebsstellung an der Innenseite der Wandung (21) des zugehörigen Schalenteils (4) der Aufschäumform (2) anliegt.

11. Vorrichtung nachh Anspruch 9, **dadurch gekennzeichnet,** daß das Verbindungsteil der Eingriffseinheit (9) mit der Wandung (21) des zugehörigen Schalenteils (4) der Aufschäumform (2) elektromagnetisch oder durch formschlüssige Halteteile, insbesondere Klammern, verbunden ist.

12. Vorrichtung nach einem der Anprüche 9 bis 11, **dadurch gekennzeichnet,** daß das Verbindungsteil der Eingriffseinheit (9) in eine formlich angepaßte Vertiefung in der Wandung (21) des zugehörigen Schalenteils (4) der Aufschäumform (2) eingesetzt ist.

13. Vorrichtung nach einem der Ansprüche 9 bis 12, **dadurch gekennzeichnet,** daß die Innenseite des Verbindungsteils (10) der Eingriffseinheit (9) die Innenseite der umgebenden Wandung (21) des zugehörigen Schalenteils (4) annähernd bündig fortsetzt.

14. Vorrichtung nach einem der Ansprüche 9 bis 13, **dadurch gekennzeichnet,** daß der Verbindungsteil (10) der Eingriffseinheit (9) annähernd fugenfrei in die umgebende Wandung (21) des zugehörigen Schalenteils (4) übergeht.

15. Vorrichtung nach Anspruch 9, **dadurch gekennzeichnet,** daß die Eingriffseinheit (109) mit ihrem Verbindungsteil (110) in eine Aussparung (120) in der Wandung (122) des zugehörigen Schalenteils (104) der Aufschäumform (102) eingesetzt ist und diese in Betriebsstellung verschließt.

16. Vorrichtung nach Anspruch 15, **dadurch gekennzeichnet,** daß ein Antrieb (124) zur kraftschlüssigen Fixierung des Verbindungsteils (110) der Eingriffseinheit (109) in der Aussparung der Wandung (122) im zugehörigen Schalenteil (104) der Aufschäumform (102) sowie Führungsglieder (125) zur Parallelführung der Eingriffseinheit (109) bei deren Herausziehen aus der Aufschäumform (102) und dem in dieser gebildeten Formkörper (105) vorgesehen sind.

17. Vorrichtung nach Anspruch 1, **dadurch gekennzeichnet**, daß der Antrieb über einen zentralen Kniehebel (126) auf die Eingriffseinheit (109) einwirkt.

18. Vorrichtung nach einem der Ansprüche 15 bis 17, **dadurch gekennzeichnet,** daß die Eingriffselemente (8;108) zumindest bereichsweise aneinander angrenzende Hülsen (16) sowie einen in jeder Hülse (16) konzentrisch angeordneten Dorn (15) umfassen.

19. Vorrichtung nach Anspruch 18, **dadurch gekennzeichnet**, daß die Hülsen (16) in parallelen Reihen neben- und hintereinander angeordnet sind.

20. Vorrichtung nach einem der Ansprüche 18 oder 19, **dadurch gekennzeichnet,** daß die Hülsen (16) in einen Teilbereich der Dicke des Formkörpers (5;105) eingreifen und die Dorne (15) den Formkörper (5;105) vollständig durchdringen.
